# EUROPEAN PATENT SPECIFICATION

(11) **EP 3 049 209 B1**
(45) Date of publication and mention of the grant of the patent: **20.09.2017**
(21) Application number: 14783958.3
(22) Date of filing: 24.09.2014
(51) Int. Cl.: B23K 9/02, B23K 9/20, B23K 9/235, B23K 31/02, C21D 9/50, H05B 6/02

(54) **METAL HEATING AND WORKING SYSTEM AND METHOD WITH HEATING AND/OR COOLING USING AN INDUCTION HEATING HEAD**
ERHITZUNGS- UND BEARBEITUNGSSYSTEM FÜR METALLE UND VERFAHREN MIT ERHITZUNG UND/ODER KÜHLUNG EINES INDUKTIONS-ERHITZUNGSKOPFS
SYSTÈME ET PROCÉDÉ POUR CHAUFFER ET TRAVAILLER LES MÉTAUX, LA CHAUFFE ET/OU LE REFROIDISSEMENT ÉTANT RÉALISÉS AU MOYEN D'UNE TÊTE DE CHAUFFE PAR INDUCTION

(30) Priority: 25.09.2013 US 201361882472 P; 23.09.2014 US 201414494248
(43) Date of publication of application: 03.08.2016
(73) Proprietor: Illinois Tool Works Inc., Glenview, IL 60025 (US)
(72) Inventor: ALBRECHT, Bruce Patrick, Glenview, Illinois 60025 (US); HSU, Christopher, Glenview, Illinois 60025 (US)
(74) Representative: Trinks, Ole
(86) International application number: PCT/US2014/057155
(87) International publication number: WO 2015/048090

(56) References cited:
- CN-A- 101 491 856
- CN-U- 201 792 078
- JP-A- H0 615 447
- JP-A- 2010 221 292
- US-A- 5 584 663
- US-A1- 2011 284 527

## Description

### BACKGROUND

The invention relates generally to metal working systems, such as welding systems, and to heating in such systems, such as to remove coatings, to apply cladding and other coatings, to allow for porosity improvement, and the like. In particular the present invention defines a metal working and heating system and a metal working and heating method according to the preamble of claims 1 and 9 respectively (see, for example, US2011/0284527 A1).

Many welding and other metal working systems are known and currently in use. In some applications, welding is performed on workpieces that have been painted, coated, clad, or that are otherwise superficially unsuitable without some preparation. This may entail removal of the superficial material before metal processing (e.g., welding). In other applications, it may be useful to apply cladding or other surfaces after welding or metal working. In still other applications, it may be useful to heat a metal work surface either before or after working, particularly in conjunction with welding operations.

There is a need in the art for improved techniques that may be adapted to one or more of these applications.

### BRIEF DESCRIPTION

The invention provides both systems and methods designed to respond to such needs. These may include welding systems of various types, and induction heating systems that heat workpieces by alternating currents passed through an induction head. In one implementation, a metal working and heating system comprises a welding torch that in operation performs a welding operation on a workpiece, and an induction heating head disposed adjacent to the welding torch and that in operation induces heating of the workpiece to control heating and/or cooling of the workpiece. A weld power control system that regulates power input to the welding operation, and an induction power control system that regulates power input to the induction head.

According to a first aspect of the present invention, a metal working and heating system is defined in claim 1, and at least comprises a welding torch that in operation performs a welding operation on a workpiece, and an induction heating head disposed adjacent to the welding torch and that in operation induces heating of the workpiece to control heating and/or cooling of the workpiece. A weld power control system regulates power input to the welding operation, an induction power control system regulates power input to the induction head, and a coordinated control system coordinates operation of the weld power control system and the induction power control system, the coordinated control system and/or the weld power control system implementing a desired welding process by control of the power input to the welding operation.

According to a second aspect of the present invention, a metal working and heating method is defined in claim 9, and at least comprises the steps of performing a welding operation on a workpiece by application of power to a welding torch, heating and/or cooling the workpiece by application of power to an induction heating head disposed adjacent to the welding torch, and coordinating operation of the weld power control system and the induction power control system by regulating power input to the welding torch and the induction heating head.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatical representation of an exemplary system in which a welding system is used in conjunction with an induction heating system for removal of surface materials before welding;
FIG. 2 is a diagrammatical representation of a similar exemplary system in which movement of an induction head is at least partially independent from movement of a welding torch;
FIG. 3 is a diagrammatical representation of an exemplary induction system for removal of surface materials before a metal working operation;
FIG. 4 is a diagrammatical representation of an exemplary system utilizing an induction heating head following a welding torch;
FIG. 5 is a diagrammatical representation of an exemplary system utilizing an induction head or coil within a welding torch;
FIG. 6 is a diagrammatical representation of an exemplary system utilizing coordinated control of induction heating with a pulsed welding process;
FIG. 7 is a diagrammatical representation of an exemplary pipe welding system in which an induction head is moveable adjacent to an internal pipe clamp;
FIG. 8 is a diagrammatical representation of an exemplary pipe welding system in which multiple induction heads are provided adjacent to an internal pipe clamp;
FIGS. 9a and 9b are diagrammatical representations of exemplary systems what may apply claddings or other materials following welding, and/or that may allow for heating after welding to improve weld quality;
FIGS. 10a and 10b are diagrammatical representations of exemplary systems for applying induction heating to a side of a metal working application to control distortion and other aspects of a workpiece;
FIG. 11 is a diagrammatical representation of a metal working application in the form a fastener securement or insertion into a workpiece, assisted by induction heating; and
FIG. 12 is a diagrammatical representation of an embodiment in which one or more sensing technologies are employed to determine a location, position, or distance of an induction heating device from an object, such as a workpiece, such as to allow for regulation of power to the device during operation.

### DETAILED DESCRIPTION

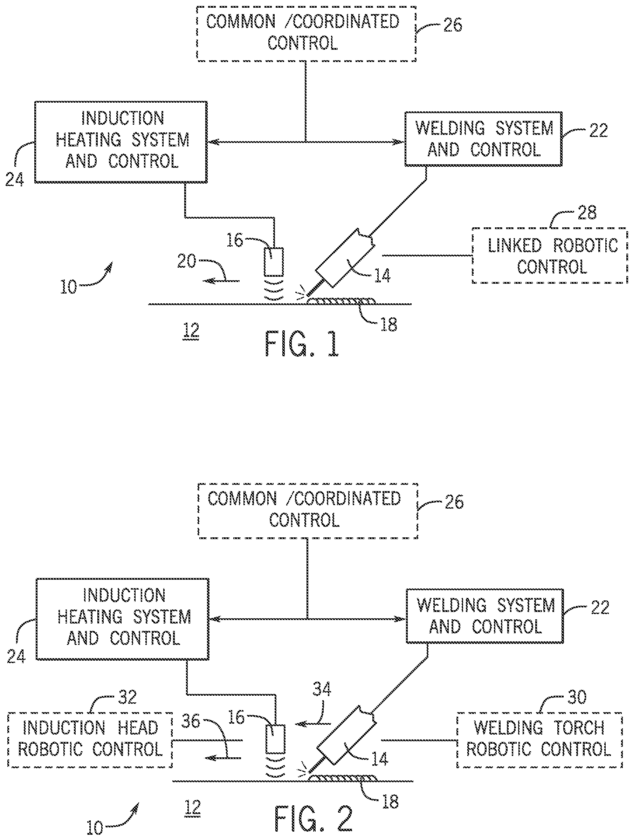

FIG. 1 illustrates an exemplary heating and metal working system 10 for performing a metal working operation, such as a welding operation on a workpiece 12. The workpiece will typically comprise one or more metals, and in many cases, particularly for welding applications, will include two or more elements that are to be joined to form a weld joint. The operation is performed by a component which, in a welding operation will typically comprise a welding torch 14. Heating adjacent to the welding operation is performed by an induction heating head 16, which in the illustrated embodiment is disposed in front of the welding torch either by fixed or flexible automation, such as by having the induction heating head and welding torch on the same bracket and/or motion device. In welding operations a weld bead 18 is formed by deposition of welding wire and/or melting of the welding wire and/or workpiece. In most welding operations the bead comprises metals from both the wire and the workpiece that are fused during re-solidification. In the embodiment of FIG. 1, the welding torch and induction heating head are moved together in a direction of travel as indicated by arrow 20. Alternatively, the workpiece, or all of the torch, heating head, and workpiece may be moved.

The system 10 also comprises a welding system and control 22 that regulates application of welding power to the welding torch, and an induction heating system and control 24 that regulates application of power to the induction heating head. As will be appreciated by those skilled in that art, the welding system will typically comprise a power supply that receives electrical power in some input form, and converts the input power to welding power, such as AC power, DC power, pulsed power, and so forth. The welding system may also include a wire feeder, various robotic and automation components, and so forth. The welding control may implement one or more desired welding processes, such as constant current processes, constant voltage processes, pulsed processes, and so forth. Similarly, any suitable services and components may be included, such as gas supplies, work clamps, welding cables, and so forth. The induction heating system may be provided together with or separately from the welding system. It will typically include power circuitry for converting incoming power to controlled power suitable to induce fields and resulting workpiece heating at desired frequencies, power levels, and so forth.

In certain embodiments, common/coordinated control 26 may be provided by appropriate circuits either separately from the welding and induction heating systems, or integrated with one or more of these. The common/ coordinated control 26 allows, according to the present invention, the regulation of power input to the welding operation, and to the induction heating head, such that specific desired heating profiles, heating times, heating locations, and so forth may be provided to optimize the welding operation, heating of the workpiece before or after the welding operation, and so forth. The welding system and/or the coordinated control may also coordinate these aspects of the operation in addition to the actual welding operation itself. It may also control common or separate movement of the welding torch, the induction heating head, the workpiece, or any of combination of these during operation.

It should be noted that reference is made in the present disclosure to metal working applications and operations, generally, but also to particular applications and operations, such as welding. In the present context, metal working applications and operations may vary widely and may include any desired welding operation (e.g., metal inert gas or MIG welding, tungsten inert gas or TIG welding, submerged arc welding, laser welding, and so forth). Such processes are sometimes referred to by other designations, such as gas metal arc welding (GMAW), gas tungsten arc welding (GTAW) and so forth. Moreover, the metal working applications may include cladding, brazing, surface treatment, fastener insertion, and so forth.

Similarly, FIG. 2 illustrates a system in which independent motion devices are used for moving the induction head at least partially independently from the welding torch. In this embodiment, a welding torch robotic control 30 may be provided for moving the welding torch (or welding system with the torch), while an induction head robotic control 32 controls movement of the induction heating head. These components may be moved at the same speed and in the same way (e.g., direction, path), or independently, as indicated by arrows 34 and 36, respectively. Such independent motion control may allow for selective, location and/or time-dependent rate of travel control of the torch and/or the heating head.

In both systems, the induction head in front of the torch may be driven to heat a workpiece sufficiently to burn paint, oils, zinc coating, dirt-oxide, primers, and other surface materials that should be removed or processed. Temperatures to remove such materials may vary with the materials, and adjustable temperatures and/or speeds may be obtained by controlling the heating and welding systems based on the coating to be processed (e.g., removed). Such materials frequently create welding problems, so the illustrated heating/welding system illustrated presents an effective removal mechanism. In some applications the speed of the induction head may be slower than the weld head, and having an independent motion ability presents advantages. That is, as a first part is being welded, the induction head may be positioned and/or move along a next part to be welded. In other cases, the travel is more compatible between welding and heating and one motion device is effective. Where surface material targeting is contemplated, the frequency used for induction heating could be adjusted or set to control the location of the heating. For example, lower frequencies (e.g., 20 kHz) may be used for general workpiece heating, while higher frequencies (e.g., 100 kHz) may make use of a skin effect of currents for more targeted surface heating (e.g., for "burnoff").

Such systems may also be used to heat the material (e.g., a workpiece) and a wire in front of the weld torch to aid in removing or reducing ambient humidity and to lower hydrogen levels in the weld. Still further, such systems may be used to induction the substrate just to the point of metal vaporization, which helps to stabilize arc welding, arc starts etc.

It should be noted that while embodiments are illustrated and described here in which the heating is performed in front of a welding operation, where desired, the heating may be performed in back of (i.e., following) or both in front and back of a welding operation. In applications where the heating is performed following the welding operation, an induction head or device of the type described could aid, for example, in flattening the weld bead just formed, in releasing or improving porosity, in improving metallurgy by controlled heating/cooling, and so forth.

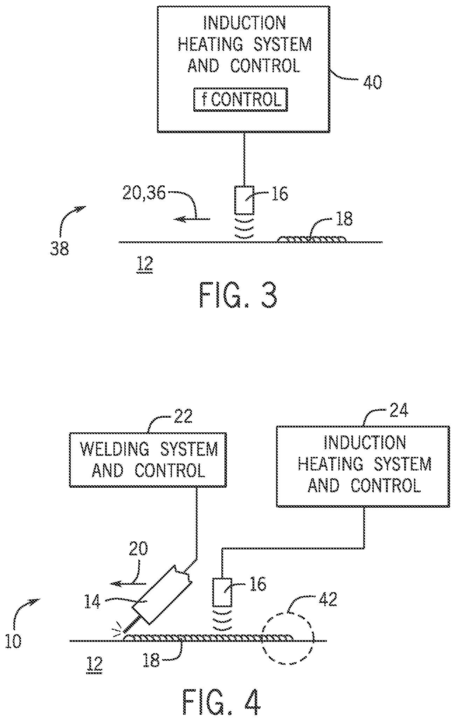

As illustrated in FIG. 3, another adaptation to this technique is to provide an independent induction heating system 38 that uses the induction head for stripping paint and coatings by heating the surface. Many paints will peel off simply due to the thermal change. Other options include changing the frequency of the induction heating and control system to create more skin effect to avoid deep heating. Subsequently, the workpiece may be worked, such as by welding. Such systems may comprise their own (e.g., stand-alone) induction heating system and control 40 that may operate independently or metal working components, or when coupled to and coordinated with welding or other systems. Such equipment may be part of a modular heating approach that allows for separate or coordinated use of the heating and metal working equipment.

As illustrated in FIG. 4, another adaptation is to follow a weld performed on certain materials, such as on zinc with the induction heating head 16 behind or following the welding torch 14, on one motion device or independently from the welding torch. Such systems may allow for heating the weld bead 18 to allow the porosity buried under the semi-molten bead to finish escaping from the bead. This may be along the entire weld or simply in problem areas 42, such as arc start and finish areas, as indicated by the broken line circle in the figure. This also allows the weld torch to travel at higher speeds with less concern of porosity. Moreover, application of energy by induction following a metal working application may allow for maintaining a portion of the workpiece in a liquid or semi-liquid state, such as for outgassing, crystal structure control, heat treatment and so forth.

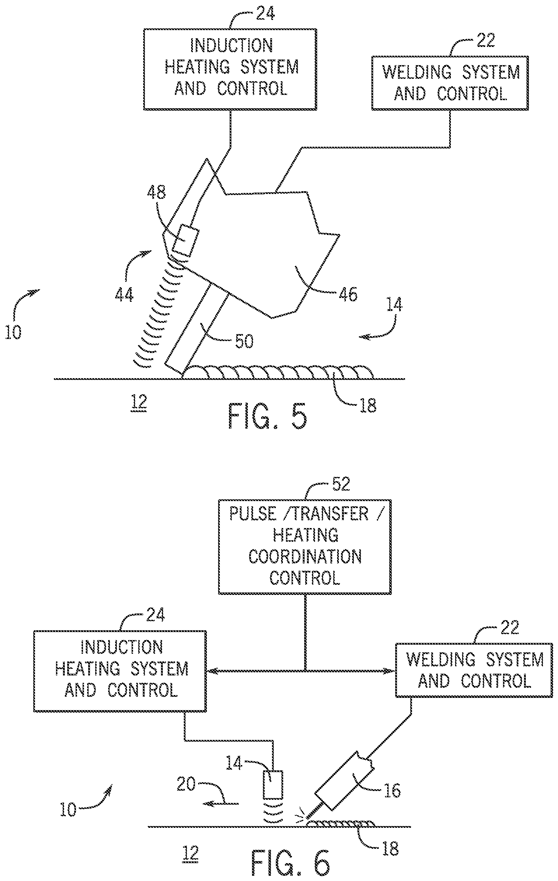

As illustrated in FIG. 5, in another exemplary system comprising a combination torch and heating head 46. Here, on or adjacent to a nozzle 46 of the welding torch 14, an induction heating head 48 is disposed, mounted and directed in any suitable manner. In this illustration, a welding wire 50 is fed from the torch, and the induction heating head 48 directs energy for induction heating at a desired location just ahead of the welding operation. Of course, the energy could be directed behind the welding operation, to one or more sides of the operation, or any combination of these.

FIG. 6 shows the induction heating head outside the torch (although the head could be located in, on, or near the torch, as discussed above). In this embodiment, heating by the induction system may be coordinated or synchronized with welding signals during key events in the weld process, such as by a pulse/transfer/heating coordination control 52, which like the coordinated control discussed above, may be separate from both the welding system and the induction system, or packaged or integrated with one or both of these.. In some systems, the induction head may be in the contact tip, liner or other torch locations. Also, induction head may be pointed at the wire from the holding fixture or other location by the torch or on the torch. A key event for coordination of control may be, for example, occurrence of a short circuit in either pulse or short circuit transfer welding processes. During the short, in conventional systems, current is commonly added to promote clearing of the short. Such added current adds heat to the workpiece and the weld puddle, and may create spatter. Some welding processes employ special current profiles or mechanical retraction to try to reduce spatter, and to reduce the current/heat added. Synchronizing an induction heating field on the wire during or just prior to the short may decrease the need for current and also reduce spatter. This may also avoid adding current that generates more plasma, and may therefore minimize energy brought into the plasma column and weld bead. Any portion of the field transferred to the plate via the induction source is spread out in area and minimizes the effects.

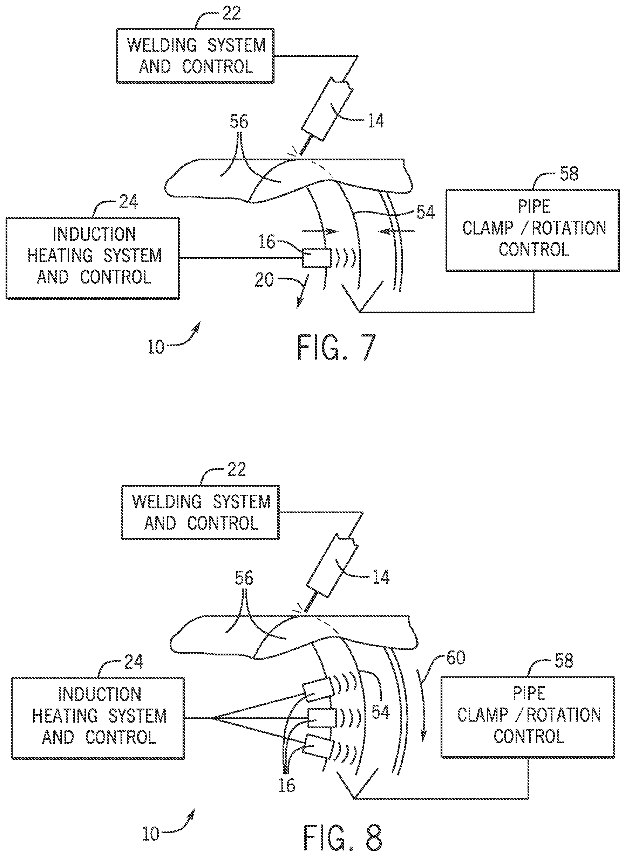

FIGS. 7 and 8 illustrate exemplary systems in which one or more induction heating heads are disposed in or adjacent to the internal clamps for pipe welding fixtures. As will be appreciated by those skilled in the art, pipe welding applications will typically target forming of a joint 54 between adjacent pipe segments 56. One or more clamps hold the two segments of pipe together longitudinally and may directly contact the inside diameter at the joint and provide copper (or other) backup for the weld to sink heat for a first pass or root pass. In the system illustrated, one or more induction coils is disposed in, on, or adjacent to the clamp, and preheat (and or post-heat) the pipe as it is held in place for welding. The temperature provided by such heating could be held for preheating and post weld heating. In an adaptation of such systems the temperature could be such to aid the welding process, to provide better transfer metal, more metal deposition, more arc stability, and so forth. In the implementation of FIG. 7, a pipe clamp/rotation control 58 provides for control of the clamping (e.g., pipe positioning), and may hold the pipe stationary or move the pipe before, during, or after the welding operation. Such control will typically be coordinated with control of the welding operation, the heating, or both of these.

In the system of FIG. 8, multiple induction coils are provided or segmented in the pipe. In this embodiment, the induction coils or head may be stationary. The pipe clamp/rotation control may cause rotation of the pipe segments (e.g., by appropriate drive of a motor and rotational drive assembly, not separately shown), as indicated by arrow 60. Here, the coils or heads are energized, de-energized, or energized at different levels corresponding to the welding torch and wire location on the pipe to provide appropriate heat during certain phases of welding and at given locations, such as to aid in the metal transfer, to provide lower or no heating after the weld passes through a region, and so forth. It is also presently contemplated that one or more induction heads or coils may be associated with, secured to, or even embedded into one of more clamps or other structures used internally (or externally) to hold or manipulate pipe sections in such applications. As will be appreciated by those skilled in the art, clamping systems (not separately shown in the figures) are commonly used to hold pipe sections in desired locations, typically facing one another end-to-end. The induction head or heads (or simply induction coils) may be attached to or embedded in portions of such clamping systems, and may be movable or stationary. In such cases, the control 24 allows, according to the present invention, for sequencing application of power to the induction heads or coils to provide heating and cooling profiles based upon the progression of metal working applications, in this case, typically welding. Other applications may include heat treating, post-weld heat treating, and so forth.

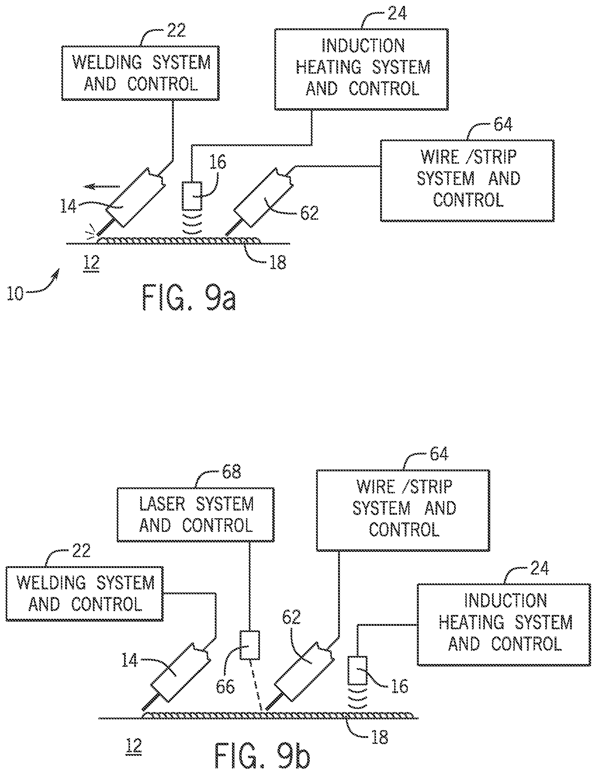

In other exemplary systems, as illustrated in FIG. 9a, metal working is performed to weld and to clad a workpiece in a multi-stage process. In this example, a first phase is to provide a plasma and transfer hard facing or cladding material either wire or strip via arc and puddle (via the welding torch 14 at the lead-in side to the left in the figure). A second phase is to provide a cold/warm/hot wire or strip transfer while the weld puddle is molten, via the torch 62 at the trailing side, which is powered and controlled by a wire/strip system and control 64. Such phases may not employ arcs, but simply deposit material into the hot puddle. Depending upon the application, this may be done with a "cold" wire or a wire heated by any suitable means (e.g., by resistive heating owing to the wire resistance and applied current). During this phase, the puddle may be maintained with induction for an extended time to extend the phase and time for deposition of the material. The induction heating head or coil 16 may or may not be powered during the first phase. A third phase may be to optionally stop the wire or strip introduction to the substrate and to use induction to complete wetting out the puddle. The wire in the second phase could be cold with no resistive current, warm with a little resistive heating current and or hot with more resistive heating current, but generally with insufficient current to create an arc or plasma.

In the exemplary system of FIG. 9b, the process could also use a further heat source, such as a laser 66 to spot heat the substrate under the control of a laser system and control 68. Cold/warm/hot wire (including powder or strip) may be applied into the spot and use induction heating to finish wetting out the puddle. Such systems may also be adapted to provide induction heating first, filler delivered second, and a further heat source, such as a laser to wet out.

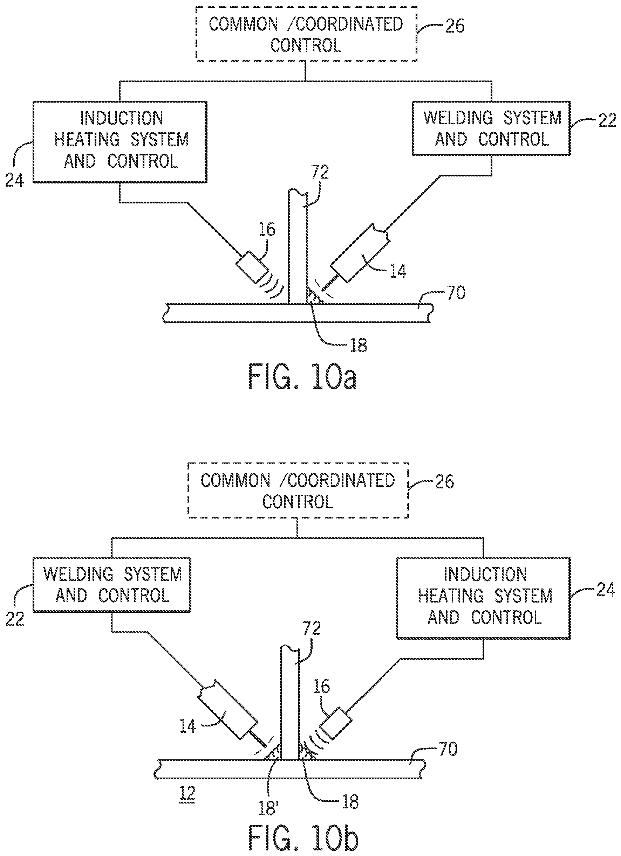

FIGS. 10a and 10b illustrate an embodiment in which induction heating is used to control attributes of a workpiece that might be affected by heating, such as during a welding operation. In this embodiment, a fillet weld is performed (in particularly here a T-fillet). The workpiece 12 comprises a base element 70 to which an upstanding element 72 is to be fixed. Angular distortion which may otherwise result from formation of the weld bead 18 is overcome by application of induction heating energy via induction heating head 16 on an opposite side of the workpiece from the welding operation. As shown in FIG. 10a, the welding operation may proceed on a first side of the workpiece with heating on the opposite side, and then where desired, a similar bead 18' may be formed on the second side, with induction heating on the first side (where the first bead 18 was formed). Here again, the heating by both operations is, according to the present invention, selected, coordinated, balanced and so forth by the respective heating and control systems, and the common or coordinated control 26.

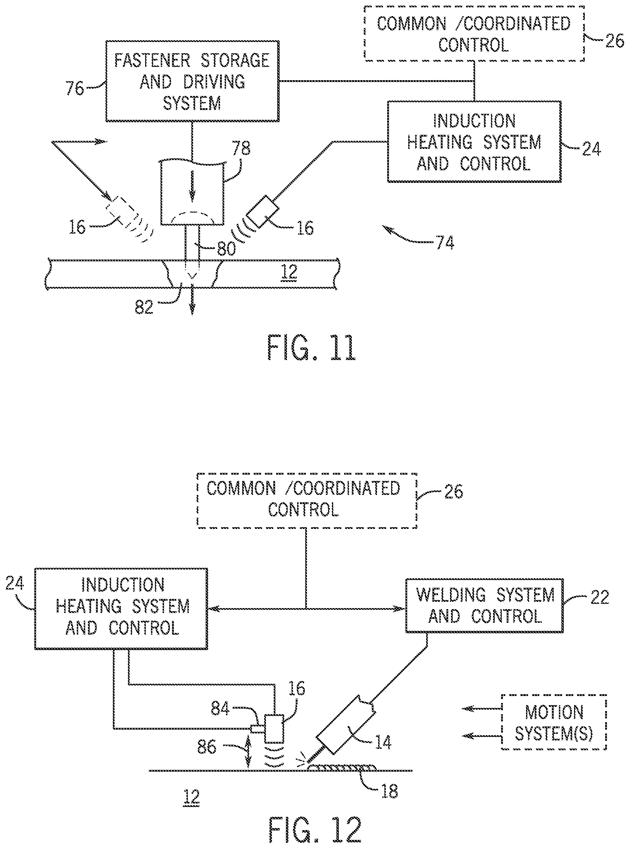

FIG. 11 illustrates a further embodiment of a metal working application assisted by induction heating. In this embodiment, a fastener insertion station 74 comprises a fastener storage and driving system 76 that is associated with a tool 78 that holds and drives fasteners 80 into workpieces 12. One or more induction heating heads 16 are provided for heating a localized portion 82 of the workpiece. When sufficiently heated (and plastic), the system may urge the fastener into or through the workpiece. Such techniques may be used for securing two elements of a workpiece to one another, for providing a stud extending from a workpiece, and so forth. Moreover, where desired, the workpiece may comprise an aperture (not shown in the figure) that is positioned to receive the fastener and the dimensions or plasticity of which are affected by the induction heating to facilitate insertion of the fastener. As before, control of the fastener insertion and induction heating is, according to the present invention, coordinated, such as via a common or coordinated control 26.

FIG. 12 illustrates an embodiment in which location, position, and/or distance, temperature, or any other relevant parameter is sensed for an induction heating device (e.g., an induction head or coil) to allow for better control of induction heating power (and power balance when desired). In this embodiment, a welding operation is performed via a torch 14, although as before the operation may be any metal working operation. Heating is provided by an induction heating head 16. Here, one or more sensors 84 are provided to sense one or more parameters of the setup or operation. In the illustrated embodiment, a position or proximity sensor 84 detects a distance or gap 86 between the induction heating head (or coil) and the workpiece. Such sensors might include, for example, various types of proximity sensors, laser ranging devices, phase shifted contact tip to work distance sensors, and so forth. Such arrangements may be used both when the induction heating head is provided in front of the metal working operation, and when it trails the operation. It is contemplated that closed loop control may be implemented in which at least one parameter of the induction heating power input is regulated based on the signal or signals from the sensors. For example, rather than adjust the distance between the induction heating head and the workpiece, power to (or current, field strength, frequency, etc.) the induction heating head may be regulated to provide the desired heating of the workpiece, which may vary with distance from the heating head. Here again, such control is, according to the present invention, coordinated, and heating balanced with heating by the metal working operation by the common or coordinated control 26.

Similarly temperatures of one or more locations of the workpiece may be sensed, and data representative of the temperature used for induction heating regulation. Sensors for detecting temperature may be built into welding tools, induction heads, weld or metal working or holding fixtures, backing strips, if used, and so forth. The temperature feedback at various points of the workpiece or weldments in welding applications can be used to regulate the induction power, the welding power, or some combination of them to provide the desired heat input, cooling rate, microstructure, distortion, and so forth. The sensors may be non-contact infrared sensors, cameras, radiofrequency tags using shape memory polymer actuation, conventional thermocouples requiring contact, or any other sensor capable of detecting temperature or any parameter indicative of temperature. In certain presently contemplated embodiments, a temperature sensor may be directed to a heat affected zone (HAZ) to monitor the cooling rate of the HAZ of a weldment. This may be quite beneficial for advanced high strength steel (AHSS) welding in automotive applications (e.g., boron steel) and also micro-alloying high strength pipe (e.g., X100 pipeline steel) welding. In boron steel automotive applications, for example, martensitic microstructure in the base metal can easily form to result in brittle mechanical properties. Temperature sensor-based induction heating can remove zinc coating as well as control microstructure in the HAZ of the base metal. In X100 and X120 pipe welding, metals may be susceptible to hydrogen embrittlement and poor low-temperature toughness, and it may be desirable to monitor and control preheat temperatures, root pass and inter-pass temperatures, and cooling rate of each weld. It should be noted that it is not only the cooling rate "curve" that may be of interest, but the temperature-time profile of the weld and HAZ during the cooling process to control the microstructure and residual stress. For example, with sensors built into the weld fixture for the entire weld, cooling may be "paused", such as to allow first cooling, then "maintained" at a certain temperature for a certain time based on a CCT diagram to obtain the desired microstructure, then cooling again, or even several such "pauses" in the cooling curve.

It should be noted that those skilled in the art will develop enhanced approaches for utilizing the technology described in the present discussion. For example, because the induction field will typically depend upon physical and material properties of the workpiece (and wire), creating reluctance paths, the joint design for the workpieces, the shape and position of the heating device, and so forth may be of particular interest in the process, and therefore a variable that welding engineers and product designers utilizing the heating techniques. Such considerations may be taken into account when designing for the appropriate induction power and weld power requirements, as well as process parameters such as whether to use "cold wire" or "hot wire" processes.

Moreover, overall, having a common control where pre- or post-weld energy input is at least partially provided by induction may be advantageous. The same is true where spot heating or heating for puddle formation or control is desired. The inductance power control is particularly useful to modulate inductance and weld power, and one or both may be controlled to optimize process parameters such as travel speed, metallurgical property control, and so forth. Also, as noted above, the nature and geometry of the workpiece(s) and joints may call for adaptation of the induction power and weld power may be useful to regulate heating of thick members and joints of different types, such as T filets (e.g., allowing for flatter beads, better penetration control, etc.). These considerations may also affect the shape of the induction device, the distance of the device from the welding torch (particularly the arc and weld puddle), whether heating precedes or follows the welding operation, whether the heating device is moved with or independently of the welding torch, and so forth. For example, temperatures on the order of 90-540 °C (200-1000 °F) may be suitable on large weldments such as 6-12 mm (0.25-0.5 inch). Furthermore, the present techniques may be used with any suitable welding process, such as AC processes, DC processes, short circuit processes, pulsed processed, electrode negative and/or electrode positive processes, as well as with any desired deposition mode (e.g., spray, globlular, droplet transfer, etc.).

While only certain features of the invention have been illustrated and described herein, many modifications and changes will occur to those skilled in the art. It is, therefore, to be understood that the appended claims are intended to cover all such modifications and changes as fall within the scope of the invention. For example, in the area of mechanical bonding, induction heating can be used as disclosed to heat aluminum or steel followed by friction stir a more plasticized material. Similarly, an induction coil may be used to heat steel or another workpiece material, and a self tapping fastener with course thread may hold parts or bond a lap joint. In some applications, a steel workpiece may be on top and an aluminum workpiece on the backside with a self-tapping or piercing fastener through the steel in an easier manner due to plasticization. Moreover, as discussed above, the induction heating disclosed in conjunction with a metal working operation may provide many benefits, such as penetration control, cooling rate control, microstructure control (in weld and heat affected zones), residual stress control, distortion control, and so forth.

## Claims

1. A metal working and heating system (10) comprising:
a torch (14) that in operation performs a welding or cladding operation on a workpiece (12);
an induction heating head (16) that in operation induces heating of the workpiece (12) to control heating and/or cooling of the workpiece (12);
a welding or cladding power system that regulates power input to the torch (14) during the welding or cladding operation;
an induction power system that regulates power input to the induction heating head (16);
**characterized by**
a common control system (26) that coordinates power output by the welding or cladding power system and power output by the induction power system,
wherein the common control system (26) balances power input between the induction heating head (16) and the torch (14), such that specific desired heating profiles, heating times, heating locations are provided to optimise the welding or cladding operation, heating of a workpiece (12) before or after the welding or cladding operation.

2. The system of claim 1, wherein the balance of power input between the induction heating head (16) and the torch (14) is operator selectable.

3. The system of claim 1 or 2, wherein the induction heating head (16) is disposed and moved ahead (16) of the welding or cladding operation, or wherein the induction heating head (16) is disposed and moved behind the welding or cladding operation.

4. The system of one of the preceding claims, wherein the induction heating head (16) is commonly mounted with the torch (14),
wherein the induction heating head (16) is moved together with the torch (14).

5. The system of one of the preceding claims, wherein the induction heating head (16) is mounted independently from the torch (14), and/or
wherein the induction heating head (16) is moved independently of the torch (14).

6. The system of one of the preceding claims, wherein induction heating power, welding or cladding power, and a welding or cladding process are controlled in coordination with one another.

7. The system of one of the preceding claims, wherein the induction heating head (16) is stationary and the workpiece (12) is moved during the welding or cladding operation, or
wherein a plurality of induction heating heads (16) are stationary during the welding or cladding operation.

8. The system of one of the preceding claims, comprising:
an operator interface configured to allow selection of at least one of a metal working process, process parameters, and a balance between power input via the two power systems.

9. A metal working and heating method comprising:
performing a metal working operation on a workpiece (12) by application of power to a torch (14);
heating and/or cooling the workpiece (12) by application of power to an induction heating head (16);
**characterized by**
coordinating operation of a metal working power system and the induction power system by regulating power input to the torch (14) and the induction heating head (16) in a selected heat balance, such that specific desired heating profiles, heating times, heating locations are provided to optimise the welding or cladding operation, heating of the workpiece (12) before or after the welding or cladding operation.

10. The method of claim 9, comprising implementing a desired metal working process by control of the power input to the metal working operation.

11. The method of claim 9 or 10, comprising moving the induction heating head (16) ahead of the torch (14), or
comprising moving the induction heating head (16) behind the torch (14).

12. The method of one of claims 9 to 11, comprising holding one or more induction heating heads (16) stationary and moving the workpiece (12) during the operation.

13. The method of one of claims 9 to 12, comprising detecting a temperature of a heat affected zone heated by the induction heating head (16), comprising controlling power or current to the induction heating head (16) based at least partially upon the detected temperature, and
comprising controlling a cooling profile of the heat affected zone based upon the detected temperature by controlling the power or current to the induction heating head (16).

14. The method of claim 13, comprising controlling the power or current to the induction heating head (16) to obtain a desired microstructure of an advanced high strength steel heat affected zone and micro-alloyed high strength pipe.

15. The method of one of claims 9 to 14, wherein the metal working operation comprises insertion of a fastener into a portion of the workpiece (12) heated by the induction heating head (16).

## Patentansprüche

1. Metallbearbeitungs- und -erhitzungssystem (10), aufweisend:
einen Brenner (14), der im Betrieb einen Schweiß- oder Plattierbetrieb an einem Werkstück (12) ausführt;
einen Induktionsheizkopf (16), der im Betrieb das Erhitzen des Werkstücks (12) induziert, um das Erhitzen und/oder Kühlen des Werkstücks (12) zu steuern;
ein Schweiß- oder Plattierleistungssystem, das die Leistungsaufnahme zum Brenner (14) während des Schweiß- oder Plattierbetriebs reguliert;
ein Induktionsleistungssystem, das die Leistungsaufnahme zum Induktionsheizkopf (16) reguliert;
**gekennzeichnet durch**
ein gemeinsames Steuersystem (26), das die Ausgangsleistung vom Schweiß- oder Plattierleistungssystem und die Ausgangsleistung vom Induktionsleistungssystem koordiniert,
wobei das gemeinsame Steuersystem (26) die Leistungsaufnahme zwischen dem Induktionsheizkopf (16) und dem Brenner (14) derart ausgleicht, dass spezifische gewünschte Heizprofile, Heizzeiten, Heizorte bereitgestellt werden, um den Schweiß- oder Plattierbetrieb und das Erhitzen eines Werkstücks (12) vor oder nach dem Schweiß- oder Plattierbetrieb zu optimieren.

2. System nach Anspruch 1, wobei der Ausgleich der Leistungsaufnahme zwischen dem Induktionsheizkopf (16) und dem Brenner (14) vom Bediener auswählbar ist.

3. System nach Anspruch 1 oder 2, wobei der Induktionsheizkopf (16) vor dem Schweiß- oder Plattierbetrieb angeordnet und voranbewegt wird (16), oder wobei der Induktionsheizkopf (16) hinter dem Schweiß- oder Plattierbetrieb angeordnet und bewegt wird.

4. System nach einem der vorstehenden Ansprüche, wobei der Induktionsheizkopf (16) gewöhnlich am Brenner (14) befestigt ist, wobei der Induktionsheizkopf (16) zusammen mit dem Brenner (14) bewegt wird.

5. System nach einem der vorstehenden Ansprüche, wobei der Induktionsheizkopf (16) unabhängig vom Brenner (14) befestigt ist, und/oder wobei der Induktionsheizkopf (16) unabhängig vom Brenner (14) bewegt wird.

6. System nach einem der vorstehenden Ansprüche, wobei die Induktionsheizungsleistung, Schweiß- oder Plattierleistung und ein Schweiß- oder Plattierprozess in Koordination miteinander gesteuert werden.

7. System nach einem der vorstehenden Ansprüche, wobei der Induktionsheizkopf (16) stationär ist und das Werkstück (12) während des Schweiß- oder Plattierbetriebs bewegt wird, oder wobei eine Vielzahl von Induktionsheizköpfen (16) während des Schweiß- oder Plattierbetriebs stationär ist.

8. System nach einem der vorstehenden Ansprüche, aufweisend:
eine Bedienerschnittstelle, die konfiguriert ist, eine Auswahl von mindestens einem von einem Metallbearbeitungsprozess, von Prozessparametern und einem Ausgleich zwischen der Leistungsaufnahme über die zwei Leistungssysteme zu ermöglichen.

9. Metallbearbeitungs- und -erhitzungssystem, aufweisend:
Ausführen eines Metallbearbeitungsbetriebs an einem Werkstück (12) durch Anwendung von Leistung bei einem Brenner (14);
Erhitzen und/oder Kühlen des Werkstücks (12) durch Anwendung von Leistung bei einem Induktionsheizkopf (16);
**gekennzeichnet durch**
Koordinieren des Betriebs eines Metallbearbeitungsleistungssystems und des Induktionsleistungssystems durch Regulieren einer Leistungsaufnahme zum Brenner (14) und zum Induktionsheizkopf (16) in einem ausgewählten Wärmeausgleich, sodass spezifische gewünschte Heizprofile, Heizzeiten, Heizorte bereitgestellt werden, um den Schweiß- oder Plattierbetrieb und das Erhitzen des Werkstücks (12) vor oder nach dem Schweiß- oder Plattierbetrieb zu optimieren.

10. Verfahren nach Anspruch 9, aufweisend das Implementieren eines gewünschten Metallbearbeitungsprozesses durch Steuern der Leistungsaufnahme zum Metallbearbeitungsbetrieb.

11. Verfahren nach Anspruch 9 oder 10, aufweisend das Bewegen des Induktionsheizkopfes (16) vor dem Brenner (14) oder
das Bewegen des Induktionsheizkopfes (16) hinter dem Brenner (14).

12. Verfahren nach einem der Ansprüche 9 bis 11, aufweisend das Stationärhalten von einem oder mehreren Induktionsheizköpfen (16) und das Bewegen des Werkstücks (12) während des Betriebs.

13. Verfahren nach einem der Ansprüche 9 bis 12, aufweisend das Detektieren einer Temperatur einer wärmebeeinflussten Zone, die durch den Induktionsheizkopf (16) erhitzt wird,
aufweisend das Steuern von Leistung oder Strom zum Induktionsheizkopf (16) basierend mindestens teilweise auf der detektierten Temperatur und aufweisend das Steuern eines Kühlprofils der wärmebeeinflussten Zone basierend auf der detektierten Temperatur durch Steuern der Leistung oder des Stroms zum Induktionsheizkopf (16).

14. Verfahren nach Anspruch 13, aufweisend das Steuern der Leistung oder des Stroms zum Induktionsheizkopf (16), um eine gewünschte Mikrostruktur einer verbesserten wärmebeeinflussten Zone von hochfestem Stahl und mikrolegierter hochfester Rohrleitung zu erlangen.

15. Verfahren nach einem der Ansprüche 9 bis 14, wobei der Metallbearbeitungsbetrieb das Einführen eines Befestigungselements in einen Abschnitt des Werkstücks (12), der durch den Induktionsheizkopf (16) erhitzt wird, aufweist.

## Revendications

1. Système de travail et de chauffage des métaux (10) comprenant :
un chalumeau (14) qui en fonctionnement effectue une opération de soudage ou de placage sur une pièce de fabrication (12) ;
une tête de chauffage par induction (16) qui en fonctionnement induit le chauffage de la pièce de fabrication (12) pour contrôler le chauffage et/ou le refroidissement de la pièce de fabrication (12) ;
un système d'alimentation de soudage ou de placage qui régule l'apport d'énergie au chalumeau (14) pendant l'opération de soudage ou de placage ;
un système d'alimentation d'induction qui régule l'apport d'énergie à la tête de chauffage par induction (16) ;
**caractérisé par**
un système de commande commun (26) qui coordonne l'énergie délivrée par le système d'alimentation de soudage ou de placage et l'énergie délivrée par le système d'alimentation d'induction,
le système de commande commun (26) équilibrant l'apport d'énergie entre la tête de chauffage par induction (16) et le chalumeau (14), de telle sorte que des profils de chauffage, temps de chauffage, emplacements de chauffage spécifiques souhaités sont prévus pour optimiser l'opération de soudage ou de placage, le chauffage d'une pièce de fabrication (12) avant ou après l'opération de soudage ou de placage.

2. Système de la revendication 1, dans lequel l'équilibre d'apport d'énergie entre la tête de chauffage par induction (16) et le chalumeau (14) est sélectionnable par l'opérateur.

3. Système de la revendication 1 ou 2, dans lequel la tête de chauffage par induction (16) est disposée et déplacée devant (16) l'opération de soudage ou de placage, ou dans lequel la tête de chauffage par induction (16) est disposée et déplacée derrière l'opération de soudage ou de placage.

4. Système d'une des revendications précédentes, dans lequel la tête de chauffage par induction (16) est montée en commun avec le chalumeau (14),
dans lequel la tête de chauffage par induction (16) est déplacée conjointement avec le chalumeau (14).

5. Système d'une des revendications précédentes, dans lequel la tête de chauffage par induction (16) est montée indépendamment du chalumeau (14), et/ou
dans lequel la tête de chauffage par induction (16) est déplacée indépendamment du chalumeau (14).

6. Système d'une des revendications précédentes, dans lequel l'énergie de chauffage par induction, l'énergie de soudage ou de placage, et un procédé de soudage ou de placage sont contrôlés en coordination les uns avec les autres.

7. Système d'une des revendications précédentes, dans lequel la tête de chauffage par induction (16) est stationnaire et la pièce de fabrication (12) est déplacée pendant l'opération de soudage ou de placage, ou
dans lequel une pluralité de têtes de chauffage par induction (16) sont stationnaires pendant l'opération de soudage ou de placage.

8. Système d'une des revendications précédentes, comprenant :
une interface d'opérateur configurée pour permettre la sélection d'au moins un élément parmi un procédé de travail des métaux, des paramètres de procédé, et un équilibre entre l'apport d'énergie par le biais des deux systèmes d'alimentation.

9. Procédé de travail et de chauffage des métaux comprenant :
la réalisation d'une opération de travail des métaux sur une pièce de fabrication (12) par application d'énergie à un chalumeau (14) ;
le chauffage et/ou le refroidissement de la pièce de fabrication (12) par application d'énergie à une tête de chauffage par induction (16) ;
**caractérisé par**
la coordination du fonctionnement d'un système d'alimentation de travail des métaux et du système d'alimentation d'induction par régulation de l'apport d'énergie au chalumeau (14) et à la tête de chauffage par induction (16) dans un équilibre thermique sélectionné, de telle sorte que des profils de chauffage, temps de chauffage, emplacements de chauffage spécifiques souhaités sont prévus pour optimiser l'opération de soudage ou de placage, le chauffage de la pièce de fabrication (12) avant ou après l'opération de soudage ou de placage.

10. Procédé de la revendication 9, comprenant la mise en oeuvre d'un procédé de travail des métaux souhaité par contrôle de l'apport d'énergie à l'opération de travail des métaux.

11. Procédé de la revendication 9 ou 10, comprenant le déplacement de la tête de chauffage par induction (16) devant le chalumeau (14), ou
comprenant le déplacement de la tête de chauffage par induction (16) derrière le chalumeau (14).

12. Procédé d'une des revendications 9 à 11, comprenant le maintien d'une ou plusieurs têtes de chauffage par induction (16) stationnaires et le déplacement de la pièce de fabrication (12) pendant l'opération.

13. Procédé d'une des revendications 9 à 12, comprenant la détection d'une température d'une zone affectée thermiquement chauffée par la tête de chauffage par induction (16),
comprenant le contrôle de l'énergie ou du courant délivré à la tête de chauffage par induction (16) au moins partiellement sur la base de la température détectée, et
comprenant le contrôle d'un profil de refroidissement de la zone affectée thermiquement sur la base de la température détectée par contrôle de l'énergie ou du courant délivré à la tête de chauffage par induction (16).

14. Procédé de la revendication 13, comprenant le contrôle de l'énergie ou du courant délivré à la tête de chauffage par induction (16) pour obtenir une microstructure souhaitée d'une zone affectée thermiquement d'un acier à haute résistance avancé et d'un tuyau micro-allié à haute résistance.

15. Procédé d'une des revendications 9 à 14, dans lequel l'opération de travail des métaux comprend l'insertion d'une pièce de fixation dans une partie de la pièce de fabrication (12) chauffée par la tête de chauffage par induction (16).
